# EUROPEAN PATENT SPECIFICATION

(11) **EP 0 966 613 B1**
(45) Date of publication and mention of the grant of the patent: **31.07.2002**
(21) Application number: 98907031.3
(22) Date of filing: 24.02.1998
(51) Int. Cl.: F16B 2/24, F24C 15/02

(54) **TUBULAR ARTICLES WITH EXTERNALLY INSTALLED ATTACHMENT CLIPS**
RÖHRENFÖRMIGER GEGENSTAND MIT VON AUSSEN ANGEORDNETEN VERBINDUNGSKLAMMERN
ARTICLES TUBULAIRES PRESENTANT DES PINCES DE FIXATION EXTERIEURES

(30) Priority: 11.03.1997 US 814553
(43) Date of publication of application: 29.12.1999
(73) Proprietor: Federal Mogul Systems Protection Group Inc., Exton, PA 19341 (US)
(72) Inventor: RADKE, Herman, E., II, Elmwood, TN 38560 (US)
(74) Representative: Hammersley, John
(86) International application number: PCT/GB98/00568
(87) International publication number: WO 98/40631

(56) References cited:
- EP-A- 0 502 579
- WO-A-98/03822
- US-A- 5 107 623
- US-A- 5 395 126

## Description

### Field of the Invention

This invention relates to tubular articles, such as gaskets, seals and sheaths, for harnessing wires or tubes and to the means for attachment of the articles to a surface. One particular application relates to the attachment of gaskets to one surface which is relatively movable toward and away from a second surface. The tubular articles of this invention are especially comprised of a thermally insulating yarn which may be supported by an inner tubular wire bulb or may itself be interbraided with wire. In a particular application, the articles are gaskets used, for example, as oven door seals.

### Background of the Invention

Woven tubular articles have been used for seals for oven doors for many years. These articles are typically made from a combination of an inner tubular support member formed of knitted wire and an outer tubular member made either by braiding, knitting or weaving an insulating material such as glass fibre yarn. Such structures have proven to be durable at the high temperatures used in self-cleaning ovens and provide a good seal despite repeated openings and closures of the oven door over many years of use. Usually, an inner tubular member of resilient wire, sometimes called a bulb, provided the necessary resilient support for the glass fibre tubular gasket. Various methods of attaching a tubular gasket to an oven or oven door surface have typically comprised providing a retaining member which extends along the gasket and locking the retaining member between sheet metal pieces of the oven door or by providing clamps at spaced locations around the periphery of the gasket. Examples of such oven gaskets and their attachments are shown in US Patent No 2,219,962 to Reynolds et al; 3,578,764 to Nunnally et al; 3,812,316 to Milbum; 3,846,608 to Valles; and 4,122,323 to Stats.

An alternative form of gasket having attachment means comprised of a wireform having spaced attachment protrusions which fit into corresponding apertures in a surface to which the gasket is to be attached is shown in US Patent Nos 4,822,060 and 5,395,126. In the '126 patent, the interior support core is eliminated. Wire interbraided with glass fibre forms a resilient support matrix which also locks the protrusions in place.

Although tubular articles of the above kind are effective for their intended purpose, fabrication requires a relatively high level of skill. A problem may arise in the production of gaskets of the '060 patent owing to the difficulty of insertion of the wireform carrying the protrusions through the knitted tubular wire bulb and then in the passage of the protrusions through the bulb and the overlayer of braided gasket material. Not only does the insertion of the wireform tend to be a difficult task to accomplish, the use of the wire form imposes a limit on the minimum gasket diameter. In addition, the passage of the protrusions through the exterior gasket layer may tear the individual strands of glass fibre if not carefully done, resulting in a potentially undesirable scrap rate. Further, because the surfaces to which the tubular articles are to be attached have attachment aperture locations at different spacings for different products, a range of wireforms having different spacings for the attachment protrusions must be provided.

Still another form of attachment means comprises individual clips as disclosed, for example in US Patent Nos 4,986,033, 5,107,623 and 5,205,075. US Patent No 5,205,075 and its equivalent EP 0,505,579 discloses a tubular gasket having a coaxial structure of a knitted, resilient wire bulb surrounded by a braided glass fibre sleeve and an attachment clip which initially has an apex and divergent then re-entrant shoulder portions and slightly non-parallel pointed ends all in the same plane. The pointed ends are inserted through at least the sleeve by piercing and with the aid of an anvil or like tool contained in the gasket are bent back towards the shoulders so as to cinch with the pierced wall to maintain the clips in an upright position so that the pointed ends extend outwardly from the gasket in a radial direction in order to facilitate insertion into the apertures formed in one of the oven surfaces.

EP 0,505,579 emphasises the value of inserting the clip ends through the interknitted support bulb and the support this offers the clips, as well as mentioning that the clips may be inserted at variable spacing along such gasket. However, radial expansion and contraction of the braid with corresponding axial contractions and expansions is not suggested in conjunction with variable aperture or clip spacing as a means of providing a gasket of varying diameter.

### Summary of the Invention

According to the invention, a tubular article is provided which, in a first preferred embodiment, is comprised of glass fibre yarn or yarn of other suitable thermally insulating fibre and a flexible and resilient support wire. Attachment clips are provided which are externally fastened to the side wall of the tubular article without the need for an interior anvil, thereby simplifying attachment of the clips, allowing for the use of tubular articles of smaller diameter and simplifying attachment of additional clips as may become necessary at the site of attachment of the article to a surface, such as one of a pair of surfaces, comprising a joint to be sealed. Preferably, when intended for use as oven gaskets, the tubular articles are formed of woven, braided or knitted glass fibre yarn, although yarns of other insulating materials may be employed. Resilience is imparted to the articles by a support layer of resilient wire which also may be interlaced as by weaving, braiding or knitting. In certain preferred embodiments of the invention the wire and the insulating yarn are interlaced into a tubular article having a composite layer comprised of the yarn and resilient wire. in preferred forms of tubular articles where the wire and yarn are braided together, the product is extremely flexible and fits around sharp comer on surfaces to which it is applied without kinking. In a gasket application, the gasket of the invention is readily compressible due to the resilient nature of the wire when the two surfaces between which a seal is to be established are brought together and readily returned to its original shape once the surfaces are separated over a life span that may included thousands of compression cycles.

In applications where the tubular articles serve the purpose of harnessing cables or tubes, the articles may be woven, braided or knitted from resilient engineering plastic monofilament materials without the incorporation of interwoven resilient wires.

According to the invention, individual wire clips are formed from separate wire sections of a relatively resilient wire which can be preformed with relatively simply tools to form attachment clips. The form of clip utilised in the invention comprises a generally pointed head portion formed by bending the wire section at about its mid-point, has diverging shoulder portions sloping away from the point of the head and crossing intermediate sections all lying substantially in a common plane. The intermediate sections are followed by base leg sections which are bent to point laterally with respect to the plane of the head and the crossing intermediate sections.

In providing a tubular article with attachment clips of the kind mentioned, a preferred tubular article is preferably braided from a combination of insulating yarn and resilient wire. The side wall of the tubular article is pinched together at a selected location for clip attachment, and the pointed end sections of a clip are passed through the pinched gasket wall just adjacent the edge of the bend. Following insertion of the pointed end sections of the clip, the projecting ends are next bent back towards the crossing intermediate portions, thereby locking the clip in place. Following attachment, the resilient tubular article is released so that it returns to a substantially cylindrical form. The process is repeated at the next location where a clip is required and continued until all locations requiring a clip have clips attached.

An advantage of the invention is that the need for an anvil or other clip attaching device fitting inside the tubular articles is eliminated. The clips can be attached at the site of attachment of the article to a surface with simple, relatively available tools, shortening installation time where clips have become separated from the articles or damaged during handling or where a particular product requires clips at additional fastening locations. Replacement of gaskets on older model oven doors is facilitated. Variable spacing of clips along a tubular article is readily and simply accomplished with the above-described invention.

### Brief Description of the Drawings

Figure 1 illustrates a tubular article having a wall portion compressed with a clip formed according to the invention at the point of insertion through its periphery;
Figure 2 is a view similar to Figure 1 showing the clip inserted with the end portions of the clip being illustrated in broken line form;
Figure 3 is a view of a gasket following attachment of a clip and the resilient wall portion released;
Figure 4 is an end view of Figure 3; and
Figure 5 is an exploded assembly view, in perspective, showing the installation of a gasket equipped with clips of the kind shown in Figures 1-4.

### Detailed Description of Preferred Embodiments of the Invention

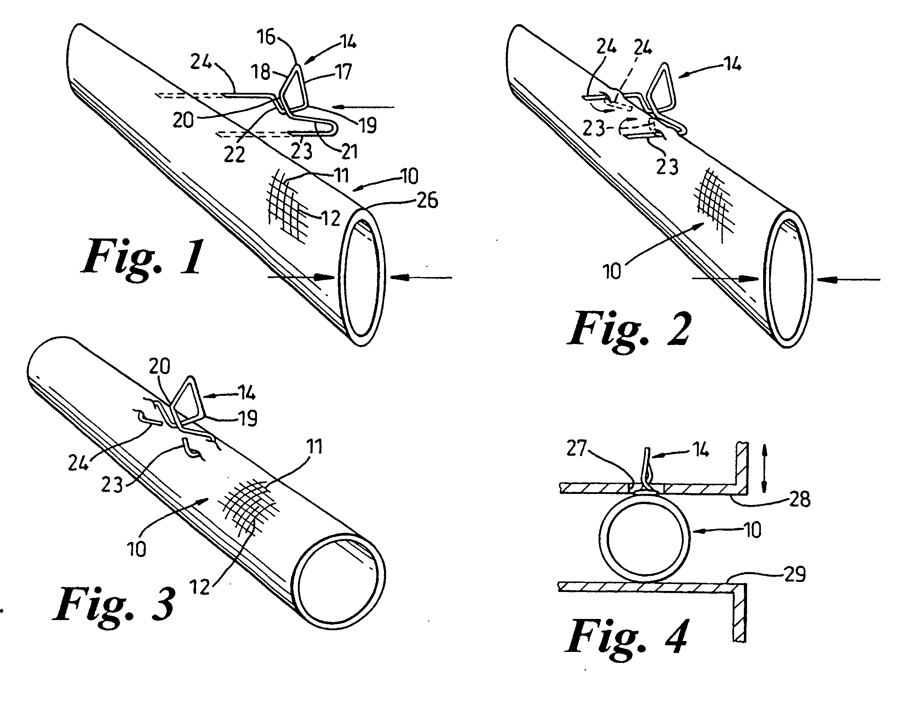

With reference to Figures 1-4 in which a preferred embodiment is disclosed, a tubular article 10 intended to serve as an oven gasket, formed preferably by braiding, is fabricated on a circular braider utilising ends of an insulating yarn such as spun glass fibre or yarns of ceramic, quartz or related materials characterised by low thermal conductivity. The yarn is preferably interbraided with a resilient wire formed of stainless steel, although other materials may be employed. Preferably, the wire is full, hard stainless steel wire of a diameter of about 9 mils (0.237mm) in a typical household type oven door application. Other metallic wires may be employed so long as they are relatively flexible and resilient so as to allow for repeated compression and have the capacity to repeatedly return to original shape over a life span which comprises thousands of cycles.

For certain applications, a separate wire bulb, preferably knitted, may be inserted within the braided layer so as to provide the requisite resilience.

In the preferred embodiments of carrying out the invention, the wire and glass fibre yarn are interbraided on a circular braider, as illustrated, for example, in US Patent No 5,395,127 incorporated herein by reference. As explained in that patent, the yarn and wire are loaded on separate carriers on the braider. A preferred braided structure is formed using 24 carriers of wire and 48 carriers of glass fibre yam in a 72 carrier circular braider. Variations of the proportions of wire and yarn may be employed. A preferred range is from about 25% wire to about 75% yarn up to about 50% wire and 50% yarn. Preferably, the yarn employed is a continuous multifilament E glass, such as type E373 supplied by the Owens Coming Fibreglass Company. Stainless steel wire of 9 mils (0.237mm) diameter is employed, although the diameter of wire may vary in range from about 3 mils (0.077mm) to about 15 mils (0.38mm) in the production of gaskets for the doors of self-cleaning ovens.

Clips 14 used for the attachment of the tubular article to an apertured surface, as for example, a surface adjacent to the perimeter of an oven door, are individually formed of separate lengths of formable wire, such as stainless steel, having a relatively high flexural modulus. Each clip is formed by bending the wire at about its mid-point to form a generally pointed head portion 16 and relatively outwardly sloping sections 17 and 18. The wire is bent again at 19 and 20 to form a pair of shoulders followed by crossing intermediate sections 21 and 22. The head and shoulder portions and the crossing intermediate portions all lie generally in the same plane. The ends of the crossing intermediate sections are bent to project laterally, as shown at 23 and 24 to form transversely extending base portions.

Attachment at selected locations on the tubular article is accomplished by selective compression of the article side wall along a selected edge portion 26.

Following compression at the selected location, the clip end portions 23 and 24 are passed through the pinched together side wall portions of the article immediately adjacent edge 26, as can be seen by inspection of Figures 1 and 2. Following insertion of the end portions of the clip; the projecting ends are bent inwardly back towards the crossing intermediate sections utilising pliers or suitable bending equipment.

Figure 3 illustrates the tubular article following attachment of a clip after the resilient wall portion has been released to allow it to return to its original, substantially cylindrical shape.

Figure 4 illustrates the tubular article of Figure 3 showing the clip projecting radially with respect to the article through an aperture 27 in a first surface 28 spaced from a second surface 29.

Following attachment of each clip, the installer progresses to the next clip location and repeats the process until all clips have been attached. In placement of the clips, a uniform internal between clips will ordinarily be employed, although variable spacing may sometimes be desirable.

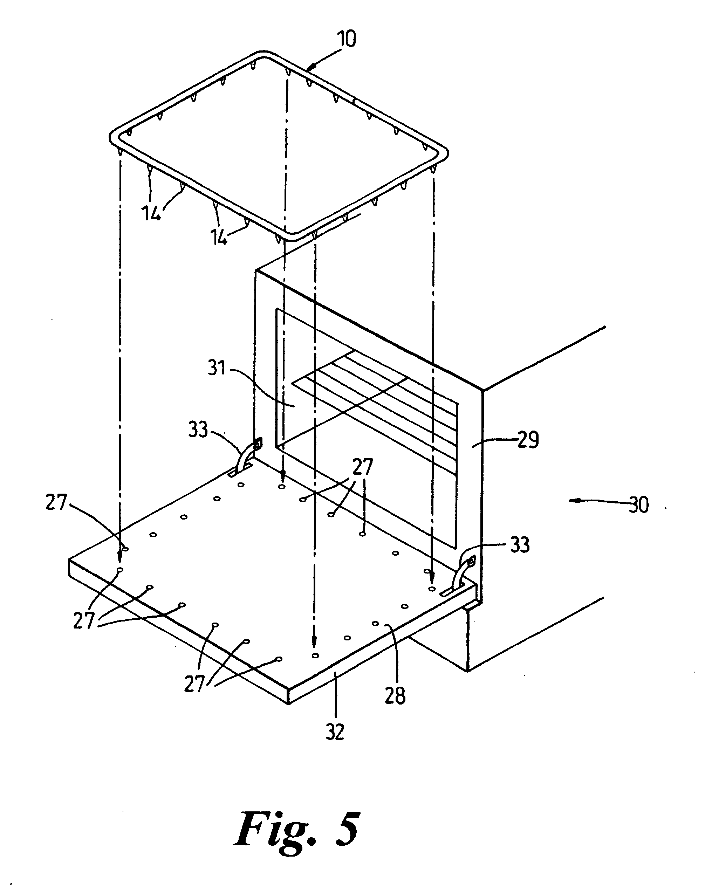

In Figure 5, an oven 30 in which an oven chamber 31 is located is provided with a door 32 hingedly attached to the oven by hinges 33. Door surface 28 is provided with apertures 27 within which the heads of clips 14 are attached. When attached, the tubular article serves as a gasket which bears against surface 29 when the oven door is closed.

As compared with clips compromised of projections extending from a single wire form, the invention facilitates variable spacing. This allows for forming gaskets in which the gasket diameter is selectively varied when a braided gasket structure allowing for radial expansion when the gasket is axially compressed is employed.

In another embodiment of the invention, the tubular article 10, as illustrated in Figure 1, may be a textile sleeve of the kind used for shielding and protection of bundles of elongated articles, such as wires, cables or tubes. Preferably, the sleeve is braided in an open braid so as to allow for radial expansion over parts, such as cable connectors or tube flanges. Although tubular sleeves incorporating the principles of the invention may sometimes be fabricated without the use of resilient wire components, the wire components are of advantage in maintaining the shape of the sleeve and providing a strong reliable structure to which clips can be anchored.

Other advantages of the invention are that the invention permits the fabrication of gaskets and other tubular articles small enough in diameter that a continuous wire form or a clip installed from inside the gasket would be impractical. Still further, tubular articles formed according to the invention allow for the custom placement of attachment clips at the site of installation of the articles and facilitate the replacement of articles where attachment apertures on a sealing surface are not at standard spacings.

## Claims

1. A tubular article (10) having attachment means for attaching said article to a support surface (28) having attachment apertures (27) spaced at predetermined intervals, said article comprising:
a tubular sleeve;
a tubular resilient support for said sleeve;
and
a plurality of resilient attachment dips (14) spaced lengthwise of the sleeve at intervals corresponding to said predetermined intervals for attachment of the article to the attachment apertures in said surface, each said clip comprising a separate discrete length of wire preformed to include a centrally located head portion (16), a pair of shoulders (19, 20) and intermediate portions (21, 22) all lying substantially in a common plane, **characterised in that** the intermediate portions (21, 22) cross each other in said plane and are followed by base portions (23, 24) first extending transversely of the head and crossed portions, said base portions being oriented to transect the arcuate periphery of said tubular sleeve in planes extended transversely thereof and being terminated in end portions extending from the arcuate periphery and being bent back towards the intermediate crossed portions.

2. A tubular article according to Claim 1 **characterised in that** said tubular sleeve is comprised of a thermally resistant yarn.

3. A tubular article according to Claim 2 **characterised in that** said yarn is a glass fibre yarn.

4. A tubular article according to Claim 3 **characterised in that** said glass fibre yarn is braided.

5. A tubular article according to any one of Claims 1 to 4 **characterised in that** said attachment clips (14) are formed of stainless steel wire.

6. A tubular article (10) for sealing a space between first and second surfaces (28, 29), wherein one of said surfaces (28) has a plurality of spaced attachment apertures (27), said tubular article comprising:
(a) interwoven yarns of an insulating material, and
(b) a plurality of individual wire clips (14) for securing the tubular article to the apertures, each said wire clip (14) comprising a single discrete length of resilient, formable wire, each said discrete length having a centrally located preformed bend, a pair of sloping sections, inclining away from said preformed bend, terminating in a pair of second preformed bends, said wire extending from said second preformed bends in a pair of intermediate sections (21, 22) to a pair of base sections, extending from the intermediate sections and each terminating in an end portion (23, 24) projecting through the periphery of said article (10), said sloping sections and said intermediate sections lying substantially in a first common plane,
**characterised in that** said material is selected from the group consisting of ceramic, quartz and glass fibres and mixtures thereof, the said intermediate sections (21, 22) cross each other in the common plane and said base sections extend from the crossing intermediate sections in a plane transversely of said first common plane such that said end portions extend also outwardly of the peripheral wall and are bent to extend lengthwise thereof.

7. A tubular article according to Claim 6, **characterised in that** said end portions (23, 24) extend through the periphery of said article in planes extending transversely of the article.

8. A tubular article according to Claim 7, **characterised in that** said end portions (23, 24) terminate in sections bent towards the intermediate crossed portions.

9. A tubular article according to Claim 8, **characterised in that** said article is knitted.

10. A tubular article according to Claim 9, **characterised in that** said article is knitted from a combination of glass fibre yarns and wire.

11. A method of making a tubular article (10) for sealing a space between two surfaces (28, 29) wherein one of said surfaces (28) is provided with a series of attachment apertures (27) spaced at predetermined intervals, said method comprising:
interlacing yams to form a tubular resilient sealing member;
providing attachment clips (14), each comprising a separate discrete length of wire preformed to include a centrally located head portion (16), a pair of shoulders (19, 20) spaced from the head portion, intermediate sections (21, 22) and a pair of base sections (23, 24) extending from said intermediate sections in substantially parallel relationship to each other all lying substantially in a common plane; and
attaching the clips to the tubular article by passing said base sections through the wall of the tubular sealing member and bending the ends of said base sections towards said intermediate sections to secure the clip in fixed relationship relative to said article,
**characterised by** providing the attachment clips (14) with said intermediate sections crossing each other in said common plane and with the base sections in plane extending transversely of said common plane, by pinching the sealing member at spaced intervals corresponding to the intervals between said attachment apertures to bring adjacent portions of the sealing member into close side-by-side relationship, by passing the base sections (23, 24) through the adjacent portions such that the ends of the base sections extend outwardly from the pinched adjacent portions and bending the ends of the base sections relatively inwardly towards the crossed intermediate sections.

## Patentansprüche

1. Röhrenförmiger Gegenstand (10) mit Befestigungsmitteln, um den Gegenstand an einer Tragoberfläche (28) zu befestigen, die in vorbestimmten Intervallen beabstandete Befestigungsöffnungen (27) aufweist, wobei der röhrenförmige Gegenstand aufweist:
eine röhrenförmige Hülle,
ein röhrenförmiger elastischer Träger für die Hülle,
und
eine Vielzahl von elastischen Befestigungsklammern (14), die längs der Hülle in Intervallen entsprechend den vorbestimmten Intervallen zum Befestigen des Gegenstands an den Befestigungsöffnungen in der Oberfläche beabstandet sind, wobei jede Klammer eine getrennte diskrete Drahtlänge umfaßt, die vorgeformt ist, um einen mittig angeordneten Kopfoereich (16), ein Paar von Schultern (19, 20) und zwischenliegende Bereiche (21, 22) einzuschließen, die alle im wesentlichen in einer gemeinsamen Ebene liegen, **dadurch gekennzeichnet, dass** die zwischenliegenden Bereiche (21, 22) einander in der Ebene überkreuzen und von Basisbereichen (23, 24) gefolgt werden, die sich zuerst transversal zu dem Kopf und den gekreuzten Bereichen erstrecken, wobei die Basisbereiche orientiert sind, den bogenförmigen Randbereich der röhrenförmigen Hülle in Ebenen zu schneiden, die sich dazu transversal erstrecken und die in Endbereichen abschließen, die sich von dem bogenförmigen Randbereich erstrecken und die in Richtung auf die zwischenliegend gekreuzten Bereiche zurück gebogen sind.

2. Röhrenförmiger Gegenstand gemäß Anspruch 1, **dadurch gekennzeichnet, dass** der röhrenförmige Gegenstand ein thermisch widerstandsfähiges Garn einschließt.

3. Röhrenförmiger Gegenstand gemäß Anspruch 2, **dadurch gekennzeichnet, dass** das Garn ein Glasfasergarn ist.

4. Röhrenförmiger Gegenstand gemäß Anspruch 3, **dadurch gekennzeichnet, dass** das Glasfasergarn geflochten ist.

5. Röhrenförmiger Gegenstand gemäß einem der Ansprüche 1 bis 4, **dadurch gekennzeichnet, dass** die Befestigungsklammern (14) aus rostfreiem Stahldraht gebildet ist.

6. Röhrenförmiger Gegenstand (10) zum Dichten eines Raumes zwischen ersten und zweiten Oberflächen (28, 29), wobei eine der Oberflächen (28) eine Vielzahl von beabstandeten Befestigungsöffnungen (27) aufweist, wobei der röhrenförmige Gegenstand aufweist:
(a) miteinander verwobene Garne eines isolierenden Materials und
(b) eine Vielzahl von einzelnen Drahtklammern (14) zum Sichern des röhrenförmigen Gegenstands an den Öffnungen, wobei jede Drahtklammer (14) eine einzelne diskrete Länge von elastischem formbarem Draht einschließt, wobei jede diskrete Länge eine mittig angeordnete vorgeformte Biegung aufweist, wobei ein Paar von schrägen Abschnitten, die von der vorgeformten Biegung sich weg neigen, in einem Paar von zweiten vorgeformten Biegungen abschließen, wobei der Draht sich von den zweiten vorgeformten Biegungen in einem Paar von zwischenliegenden Abschnitten (21, 22) zu einem Paar von Basisabschnitten erstreckt, die sich von den zwischenliegenden Abschnitten erstrecken und die jeweils in einem Endbereich (23, 24) enden, der durch den Randbereich des Gegenstands (10) hervorspringt, wobei die schrägen Abschnitte und die zwischenliegenden Abschnitte im wesentlichen in einer ersten gemeinsamen Ebene liegen,
**dadurch gekennzeichnet, dass** das Material aus einer Gruppe ausgewählt wird, die Keramik, Quarz und Glasfasern und Mischungen davon enthält, dass die zwischenliegenden Abschnitte (21, 22) einander in der gemeinsamen Ebene kreuzen und dass die Basisabschnitte sich von den kreuzenden zwischenliegenden Abschnitten in einer Ebene transversal zu der ersten gemeinsamen Ebene erstrecken, so dass die Endbereiche ebenfalls sich auswärts von der Randwandung erstrecken und gebogen sind, um sich längs dazu zu erstrecken.

7. Röhrenförmiger Gegenstand gemäß Anspruch 6, **dadurch gekennzeichnet, dass** die Endbereiche (23, 24) sich durch den Randbereich des Gegenstands in Ebenen erstrecken, die sich transversal zu dem Gegenstand erstrecken.

8. Röhrenförmiger Gegenstand gemäß Anspruch 7, **dadurch gekennzeichnet, dass** die Endbereiche (23, 24) in Abschnitten abschließen, die in Richtung auf die zwischenliegenden gekreuzten Bereiche gebogen sind.

9. Röhrenförmiger Gegenstand gemäß Anspruch 8, **dadurch gekennzeichnet, dass** der Gegenstand gestrickt ist.

10. Röhrenförmiger Gegenstand gemäß Anspruch 9, **dadurch gekennzeichnet, dass** der Gegenstand aus einer Kombination von Glasfasergarn und Draht gestrickt ist.

11. Verfahren zum Herstellen eines röhrenförmiger Gegenstands (10) zum Dichten eines Raums zwischen zwei Oberflächen (28, 29), wobei eine der Oberflächen (28) mit eine Reihe von Befestigungsöffnungen (27) versehen ist, die in vorbestimmten Intervallen beabstandet sind, wobei das Verfahren einschließt:
Zusammenfügen von Garnen, um ein röhrenförmiges elastisches dichtendes Glied zu bilden, Bereitstellen von Befestigungsklammern (14), wobei jede eine getrennte diskrete Drahtlänge einschließt, die vorgeformt ist, um einen mittig angeordneten Kopfbereich (16), ein Paar von Schultern (19, 20), die von dem Kopfbereich beabstandet sind, zwischenliegende Abschnitte (21, 22) und ein Paar von Basisabschnitten (23, 24) einzuschließen, die sich von den zwischenliegenden Abschnitten in einer im wesentlichen parallelen Beziehung zueinander erstrecken, die alle im wesentlichen in einer gemeinsamen Ebene liegen, und
Befestigen der Klammern an den röhrenförmigen Gegenstand, indem die Basisabschnitte durch die Wandung des röhrenförmigen dichtenden Glieds geführt werden und Biegen der Enden der Basisabschnitte in Richtung auf die zwischenliegenden Abschnitte, um die Klammern in einer festen Beziehung in Bezug auf den Gegenstand zu sichern,
**gekennzeichnet durch** Bereitstellen der Befestigungsklammern (14) mit den sich in der gemeinsamen Ebene gegenseitig kreuzenden zwischenliegenden Abschnitten und mit den Basisabschnitten in einer Ebene, die sich transversal zu der gemeinsamen Ebene erstreckt, **durch** Klemmen des dichtenden Glieds in beabstandeten Intervallen entsprechend den Intervallen zwischen den Befestigungsöffnungen, um angrenzende Bereiche des dichtenden Glieds in eine eng-benachbarte Beziehung zu bringen, **durch** Durchführen der Basisabschnitte (23, 24) **durch** die angrenzenden Bereiche, so dass die Enden der Basisabschnitte sich auswärts von den geklemmten angrenzenden Bereichen erstrecken, und Biegen der Enden der Basisabschnitte relativ einwärts in Richtung auf die gekreuzten zwischenliegenden Abschnitte.

## Revendications

1. Article tubulaire (10) comportant un moyen de fixation pour fixer ledit article à une surface de support (28) comportant des ouvertures de fixation (27) espacées à des intervalles prédéterminés, ledit article comprenant :
une gaine tubulaire ;
un support élastique tubulaire pour ladite gaine ;
et
une pluralité d'attaches de fixation élastiques (14) espacées dans le sens de la longueur de la gaine à des intervalles correspondants auxdits intervalles prédéterminés pour fixation de l'article aux ouvertures de fixation dans ladite surface, chaque dite attache comprenant une longueur distincte, séparée, de fil métallique préformée pour inclure une partie de tête située centralement (16), une paire de parties d'épaulements (19, 20) et des parties intermédiaires (21, 22) se situant toutes sensiblement dans un plan commun, **caractérisé en ce que** les parties intermédiaires (21, 22) se croisent dans ledit plan et sont suivies par des parties de base (23, 24) s'étendant tout d'abord transversalement aux parties de tête et parties se croisant, lesdites parties de base étant orientées pour couper la périphérie arquée de ladite gaine tubulaire dans des plans s'étendant transversalement à celle-ci et se terminant en des parties d'extrémités s'étendant depuis la périphérie arquée et étant repliées vers les parties intermédiaires se croisant.

2. Article tubulaire selon la revendication 1, **caractérisé en ce que** ladite gaine tubulaire est composée d'un fil résistant à la chaleur.

3. Article tubulaire selon la revendication 2, **caractérisé en ce que** ledit fil est un fil de verre textile.

4. Article tubulaire selon la revendication 3, **caractérisé en ce que** ledit fil de verre textile est tressé.

5. Article tubulaire selon l'une quelconque des revendications 1 à 4, **caractérisé en ce que** lesdites attaches de fixation (14) sont faites de fil d'acier inoxydable.

6. Article tubulaire (10) pour étancher un espace entre des première et deuxième surfaces (28, 29), dans lequel l'une desdites surfaces (28) comporte une pluralité d'ouvertures de fixation espacées (27), ledit article tubulaire comprenant :
(a) des fils entrelacés d'un matériau isolant, et
(b) une pluralité d'attaches de fils métalliques individuelles (14) pour fixer l'article tubulaire aux ouvertures, chaque dite attache de fil métallique (14) comprenant une longueur unique, séparée, de fil métallique élastique adapté à un préformage, chaque dite longueur séparée comportant un coude préformé, situé centralement, une paire de sections inclinées, s'inclinant loin dudit coude préformé, se terminant en une paire de deuxièmes coudes préformés, ledit fil métallique s'étendant depuis lesdits deuxièmes coudes préformés en une paire de sections intermédiaires (21, 22) jusqu'à une paire de sections de base, s'étendant depuis les sections intermédiaires et se terminant chacune en une partie d'extrémité (23, 24) faisant saillie à travers la périphérie dudit article (10), lesdites sections inclinées et lesdites sections intermédiaires se situant sensiblement dans un premier plan commun,
**caractérisé en ce que** ledit matériau est sélectionné dans le groupe consistant en matière céramique, quartz et fibres de verre et mélanges de ceux-ci, lesdites sections intermédiaires (21, 22) se croisent dans le plan commun et lesdites sections de base s'étendent depuis les sections intermédiaires se croisant dans un plan transversalement audit premier plan commun de manière que lesdites parties d'extrémités s'étendent également vers l'extérieur de la paroi périphérique et soient repliées pour s'étendre dans le sens de la longueur de celle-ci.

7. Article tubulaire selon la revendication 6, **caractérisé en ce que** lesdites parties d'extrémités (23, 24) s'étendent à travers la périphérie dudit article dans des plans s'étendant transversalement à l'article.

8. Article tubulaire selon la revendication 7, **caractérisé en ce que** lesdites parties d'extrémités (23, 24) se terminent en des sections repliées vers les parties intermédiaires se croisant.

9. Article tubulaire selon la revendication 8, **caractérisé en ce que** ledit article est tricoté.

10. Article tubulaire selon la revendication 9, **caractérisé en ce que** ledit article est tricoté à partir d'une combinaison de fils métalliques et fils de verre textile.

11. Procédé de fabrication d'un article tubulaire (10) pour étancher un espace entre deux surfaces (28, 29), dans lequel l'une desdites surfaces (28) est dotée d'une série d'ouvertures de fixation (27) espacées à des intervalles prédéterminés, ledit procédé comprenant les phases consistant à :
entrelacer des fils pour former un élément d'étanchéité élastique, tubulaire ;
prévoir des attaches de fixation (14), chacune comprenant une longueur distincte, séparée, de fil métallique préformée pour inclure une partie de tête située centralement (16), une paire de parties d'épaulements (19, 20) espacées de la partie de tête, des sections intermédiaires (21, 22) et une paire de sections de base (23, 24) s'étendant depuis lesdites sections intermédiaires en étant sensiblement parallèles l'une par rapport à l'autre et les parties se situant toutes sensiblement dans un plan commun, et
fixer les attaches à l'article tubulaire en faisant passer lesdites sections de base à travers la paroi de l'élément d'étanchéité tubulaire et replier les extrémités desdites sections de base vers lesdites sections intermédiaires pour assujettir l'attache fixement relativement audit article,
**caractérisé en ce que** les attaches de fixation (14) sont dotées desdites sections intermédiaires se croisant dans ledit plan commun et des sections de base dans un plan s'étendant transversalement audit plan commun, **en ce que** l'élément d'étanchéité est pincé à des intervalles espacés correspondant aux intervalles entre lesdites ouvertures de fixation pour amener des parties adjacentes de l'élément d'étanchéité en relation de juxtaposition étroite, **en ce que** les sections de base (23, 24) sont passées à travers les parties adjacentes de manière que les extrémités des sections de base s'étendent vers l'extérieur des parties adjacentes pincées et **en ce que** les extrémités des sections de base sont repliées relativement vers l'intérieur vers les sections intermédiaires se croisant.
